# EUROPEAN PATENT APPLICATION

(11) **EP 0 721 919 A1**
(43) Date of publication of application: **17.07.1996**
(21) Application number: 96100098.1
(22) Date of filing: 05.01.1996
(51) Int. Cl.: C01G 3/02, C01B 13/34

(54) **Method for making copper (I) oxide powders by aerosol decomposition**

(30) Priority: 10.01.1995 US 370749
(71) Applicant: E.I. DU PONT DE NEMOURS AND COMPANY, Wilmington Delaware 19898 (US); UNIVERSITY OF NEW MEXICO, Albuquerque, NM 87102 (US)
(72) Inventor: Glicksman, Howard D., Wilmington, Delaware 19807 (US); Kodas, Toivo T., Albuquerque, New Mexico 87122 (US); Majumdar, Diptarka, Albuquerque, New Mexico 97106 (US)
(74) Representative: von Kreisler, Alek, Dipl.-Chem.

(57) **Abstract**

The invention is directed to a method for the manufacture of substantially fully dense, finely divided, spherical particles of copper I oxide.

## Description

### Field of the Invention

The invention is directed to an improved process for making copper (I) oxide powders. In particular, the invention is directed to a process for making such powders that are substantially fully dense, single phase, with high purity and with spherical morphology.

### Background of the Invention

In thick film conductor systems, copper (I) oxide is used to promote adhesion to substrates. Copper (I) oxide powder is added to form chemical or reactive bonds with the substrate, thereby enhancing the adhesion of the conductor.

Known methods of manufacture of copper (I) oxide involve the furnace reduction of mixtures of copper oxides and copper, the electrolytic process involving plating copper (I) oxide from an alkaline sodium solution using copper electrodes, or reducing alkaline solutions of copper (II) salts. These inherently do not produce phase pure copper (I) oxide. Some copper (II) oxide is present. This copper (II) oxide impurity dilutes the efficacy of the copper (I) oxide and can degrade the solderability of thick film conductors. In addition, these processes are not easily controlled and, therefore, are not found to produce materials with uniform particle size and shape, both of which are very important in the improvement in the properties of thick film pastes.

With increasing circuit complexity and decreasing feature sizes, thick film pastes must be composed of pure and chemically uniform particles with very well controlled particle size distributions. Spray pyrolysis has emerged as a promising technique for the production of pure, spherical powders with compositional homogeneity at the molecular level with a uniform particle size.

### Brief Description of the Drawings

Figure 1 is a TEM photograph at magnification of 40,000X of copper (I) oxide that depicts a not fully dense particle.

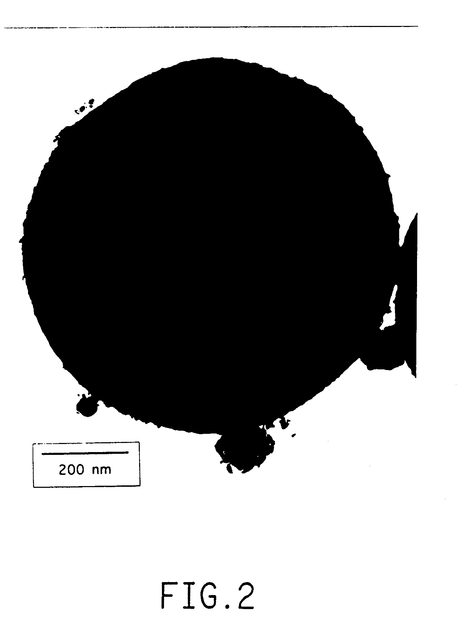

Figure 2 is a TEM photograph at magnification of 100,000X of copper (I) oxide that depicts a fully dense particle.

Figure 3 is an experimental apparatus used for spray pyrolysis.

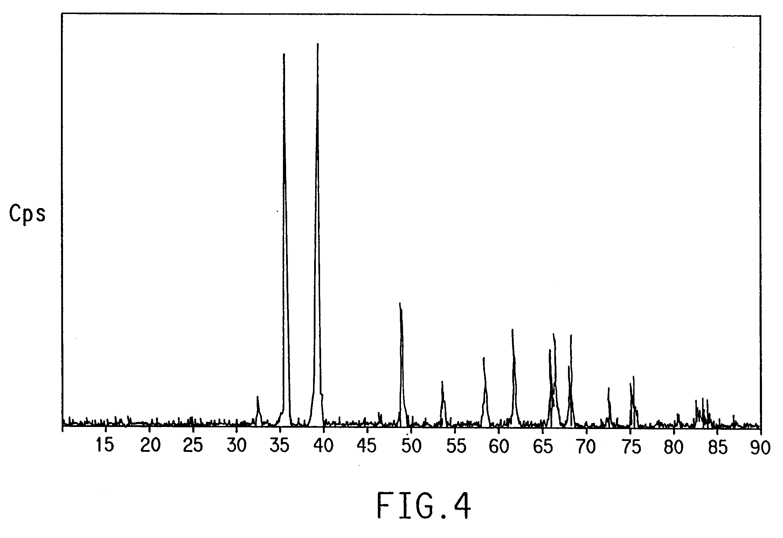

Figure 4 is an X-ray diffraction of Example 3 from Table 1 showing copper (II) oxide.

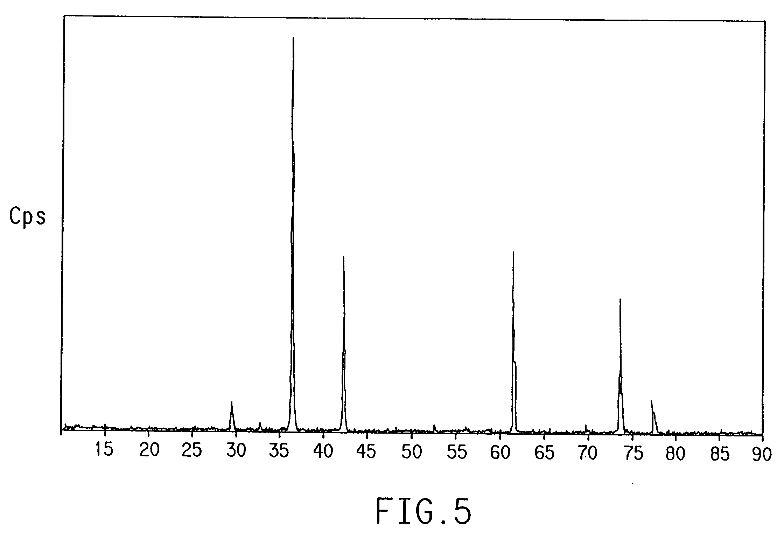

Figure 5 is an X-ray diffraction of Example 6 from Table 1 showing copper (I) oxide.

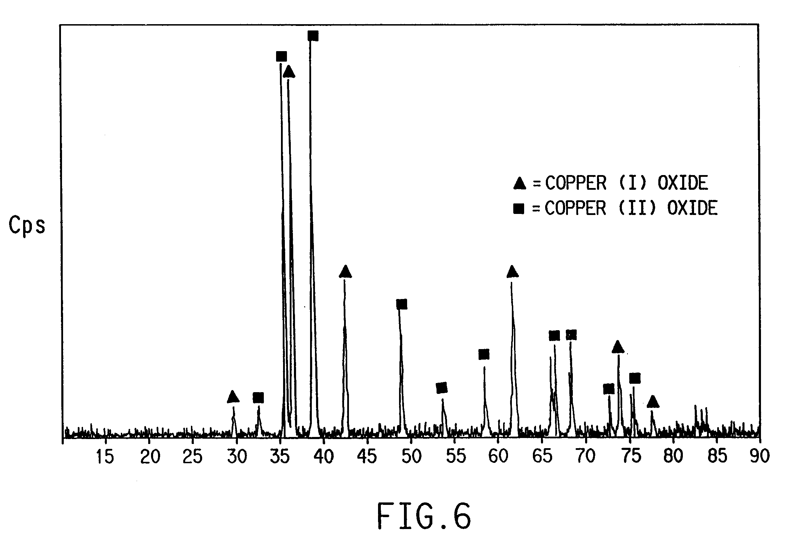

Figure 6 is an X-ray diffraction of Example 5 from Table 1 showing a mixture of copper (I) oxide and copper (II) oxide.

### Summary of the Invention

The invention is directed to a method for the manufacture of substantially fully dense, finely divided, spherical particles of copper (I) oxide (Cu₂O) comprising the sequential steps:
a. forming an unsaturated solution of a thermally volatilizable solvent;
b. forming an aerosol consisting essentially of finely divided droplets of the solution from step A dispersed in an inert carrier gas, the droplet concentration which is below the concentration where collisions and subsequent coalescence of the droplets results in a 10% reduction in droplet concentration;
C. heating the aerosol to an operating temperature of at least 800°C but below the decomposition temperature of copper (I) oxide, wherein the solvent is volatilized, the copper containing compound is decomposed to form the copper (II) oxide (CuO), the copper (II) oxide is decomposed to form the copper (I) oxide (Cu₂O), and the copper (I) oxide is densified; and
d. separating the particles of copper (I) oxide from the carrier gas, reaction by-products and solvent volatilization products.

### Detailed Description of the Invention

### Copper Containing Compound

Any soluble copper salt can be used in the method of the invention so long as it is inert with respect to the carrier gas used to form the aerosol. Examples of suitable salts are cupric nitrate, cupric sulfate, cupric formate, and cupric acetate. Insoluble copper salts are not suitable. The copper containing compound may be used in concentrations as low as 0.002 mole/liter and upward to just below the solubility limit of the particular salt. It is preferred not to use concentrations below 0.002 mole/liter or higher than 90% of saturation.

While it is preferred to use water-soluble copper salts as the source of copper for the method of the invention, the method can, nevertheless, be carried out effectively with the use of other solvent soluble compounds such as organometallic copper compounds dissolved in either aqueous or organic solvents.

### Operating Variables

The method of the invention can be carried out under a wide variety of operating conditions so long as the following fundamental criteria are met:
1. The concentration of the copper containing compound must be below the saturation concentration at the feed temperature and preferably not to use concentration below 0.002 mole/liter at higher than 90% of saturation concentration in order to prevent precipitation of solids before removal of the liquid solvent;
2. The concentration of the droplets in the aerosol must be sufficiently low so that it is below the concentration where collisions and subsequent coalescence of the droplets results in a 10% reduction in droplet concentration causing significant broadening of size distribution.

Though it is essential to operate under the saturation point of the copper containing compound, the concentration is not otherwise critical in the operation of the process. Much lower concentrations of the copper containing compound can be used. However, it will ordinarily be preferred to use higher concentrations to maximize the mass of particles that can be made per unit of time. Once a nebulizer is chosen, the concentration will determine the resulting particle size of the copper oxide. The higher the concentration in the droplet, the more mass in the droplet and the subsequent increase in the size of the particle.

Any conventional apparatus for droplet generation may be used such as nebulizers, Collision nebulizers, ultrasonic nebulizers, vibrating orifice aerosol generators, centrifugal atomizers, two-fluid atomizers, electrospray atomizers and the like. The particle size of the powder is a direct function of the droplet sizes generated. The size of the droplets in the aerosol is not critical in the practice of the method of the invention. However as mentioned above, it is important that the number of droplets not be so great as to incur excessive coalescence which may broaden the particle size distribution and increase particle size.

In addition, for a given aerosol generator, concentration of the solution of the copper containing compound has an effect on the particle size of the powder. In particular, particle size is an approximate function of the cube root of the concentration. Therefore, the higher the copper containing compounds concentration, the larger the particle size of the copper (I) oxide powder. If a greater change in particle size is needed, a different aerosol generator must be used.

Virtually any carrier gas which is inert with respect to the solvent for the copper containing compound and with respect to the compounds themselves and the copper (I) oxide powder, may be used as the carrier gas in the practicing of the invention. Examples of suitable carrier gases are nitrogen, argon, helium, and the like.

The temperature range over which the method of the invention can be carried out is quite wide and ranges from the decomposition temperature of copper (II) oxide (about 800°C in N₂) to the decomposition temperature of the copper (I) oxide (approximately 1400°C) although below 1235°C is the preferred operating temperature. This invention allows for the production of spherical, pure, single phase copper (I) oxide at a temperature of 800°C which is significantly below the melting point of copper (I) oxide. In addition, by operating at temperatures above 1000°C, fully dense, spherical, pure, single phase copper (I) oxide powder can be produced. Fully dense herein means devoid of hollow spaces.

The type of apparatus used to heat the aerosol is not by itself critical and either direct or indirect heating may be used. For example, tube furnaces may be used or direct heating in combustion flames may be used.

Upon reaching the reaction temperature and after the particles are fully densified, they are separated from the carrier gas, reaction by-products and solvent volatilization products and the powder collected by one or more devices such as filters, cyclones, electrostatic separators, bag filters, filter discs, and the like. The by-products generated upon completion of the reaction consists of the carrier gas, decomposition products of the copper containing compound, and solvent vapor. Thus, in the case of preparing copper (I) oxide from aqueous copper nitrate using N₂ as the carrier gas, the by-products generated from the method of the invention will consist of nitrogen oxide(s), water, and N₂ gas.

### Test Apparatus

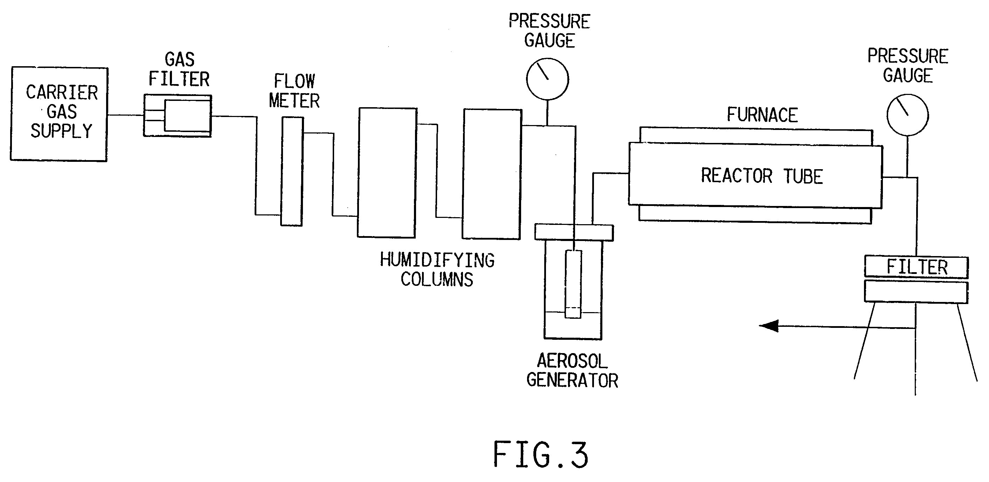

The experimental apparatus used in the Examples is shown in Figure 3. A source of carrier gas supplies the N₂ through the regulator and gas flow meter. The carrier gas flow rate determined the residence time of the aerosol in the reactor. The aerosol was produced using a modified BGI Collison CN - 25 generator and the reactor was a Lindberg 3-zone furnace with a 91 cm. heated region. A 152 cm. Coors mullite reactor tube (9cm. O.D., 8 cm. I.D.) was used. The powders were collected on a membrane filter supported by a heated stainless steel filter holder. The filter was a Tuffryn membrane filter (142 mm dia., 0.45 micron pore dia.) supported on a Gelman 147 mm dia. filter holder.

### Copper Nitrate Solution

In the Examples which follow, the copper nitrate solution used for the production of the copper oxide powder samples was prepared by the following procedure:
1. Add 79.55 g of 99.99% pure copper (II) oxide to a beaker.
2. Slowly add 180 g of nitric acid (70% by weight) to the copper (II) oxide powder.
3. Gently heat and stir the mixture for several hours until all the powder has dissolved to produce a blue solution.
4. Slowly add additional copper (II) oxide powder until some of the powder remains undissolved.
5. Filter the solution to remove undissolved powder.
6. Dilute the solution to desired molarity. Fourteen process runs were performed in which the method of the invention was demonstrated. The operating conditions of these runs are shown in Table 1 along with the selected properties of the copper oxide particles produced thereon.

### Examples

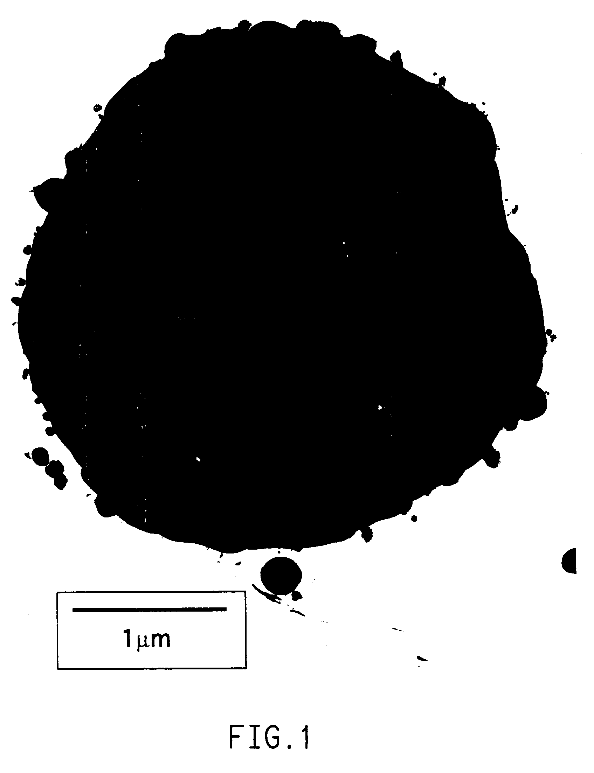

Examples 1-4 indicate that copper (II) oxide is produced at temperatures at or below 700°C in nitrogen. These particles are not fully densified. As the temperature is increased, the particles become more crystalline as indicated by the narrowing of the x-ray diffraction peaks. Transmission electron microscopy (TEM) indicate that the particles are not fully dense and contain some hollow and void spaces as depicted in Figure 1.

Examples 5 and 6 indicate that at 800°C in nitrogen, pure phase copper (I) oxide can be produced if the residence time is long enough. Example 5 was made with a residence time of 3.0 sec. and was found to contain a mixture of Cu(I) oxide and Cu(II) oxide as shown by x-ray diffraction. Increasing the residence time to 5.1 sec. (example 6) produced phase pure Cu(I) oxide. Example 6 powder was found to not be fully dense as indicated by void spaces.

Examples 7-9 indicate that at temperatures of 1000°C or higher, fully dense, phase pure, spherical copper (I) oxide powder is produced. Below 1000°C, some of the particles (not all) are not fully dense and still have some void spaces in them as shown by Figure 1.

Examples 10-11 indicate that using the inert gas argon as the carrier gas produces similar results to that reported using nitrogen gas.

Examples 12-14 were made using air as the carrier gas which is not inert to this system. These examples show that at temperatures between 800°C and 1200°C, the resulting product is copper (II) oxide. At 1200°C, a mixture of copper (I) oxide and copper (II) oxide was obtained as shown by x-ray diffraction. The oxygen in the air keeps the copper oxide oxidized to the +2 state until the high temperature of 1200°C where the copper (II) oxide decomposes partially to Cu(I) oxide.

**Table 1**

| Example | Copper nitrate mole/1 | Temperature °C | Carrier gas | Flow rate 1pm | Residence time sec. | X-ray diffraction | Density TEM |
|---|---|---|---|---|---|---|---|
| 1 | 1.0 | 400 | N₂ | 7.79 | 7.0 | CuO | not dense |
| 2 | 1.0 | 500 | N₂ | 7.79 | 6.0 | CuO | not dense |
| 3 | 1.0 | 600 | N₂ | 6.04 | 6.9 | CuO | not dense |
| 4 | 1.0 | 700 | N₂ | 6.04 | 6.2 | CuO | not dense |
| 5 | 1.0 | 800 | N₂ | 11.36 | 3.0 | Cu₂O, CuO | mixture |
| 6 | 1.0 | 800 | N₂ | 6.62 | 5.1 | Cu₂O | not dense |
| 7 | 1.0 | 900 | N₂ | 5.45 | 5.8 | Cu₂O | not dense |
| 8 | 1.0 | 1000 | N₂ | 9.55 | 3.0 | Cu₂O | dense |
| 9 | 0.5 | 1200 | N₂ | 9.55 | 2.6 | Cu₂O | dense |
| 10 | 1.0 | 800 | Ar | 7.79 | 5.2 | Cu₂O | not dense |
| 11 | 1.0 | 1200 | Ar | 9.55 | 3.0 | Cu₂O | dense |
| 12 | 1.0 | 800 | air | 7.79 | 5.2 | CuO | not dense |
| 13 | 1.0 | 1000 | air | 9.55 | 3.6 | CuO | not dense |
| 14 | 1.0 | 1200 | air | 7.79 | 3.8 | Cu₂O, CuO | mixture |

## Claims

1. A method for the manufacture of substantially fully dense, finely divided, spherical particles of copper (I) oxide (Cu₂O) comprising the sequential steps:
A. forming an unsaturated solution of a thermally decomposable copper containing compound in a thermally volatilizable solvent;
B. forming an aerosol consisting essentially of finely divided droplets of the solution from step A dispersed in an inert carrier gas, the droplet concentration being below the concentration where collisions and subsequent coalescence of the droplets results in a 10% reduction in droplet concentration;
C. heating the aerosol to an operating temperature of at least 800°C but below the decomposition temperature of copper (I) oxide, wherein the solvent is volatilized, the copper containing compound is decomposed to form the copper (II) oxide (CuO), the copper (II) oxide is decomposed to form the copper (I) oxide (Cu₂O), and the copper (I) oxide is densified; and
D. separating the substantially fully dense, spherical particles of copper (I) oxide from the carrier gas, reaction by-products and solvent volatilization products.

2. The method of claim 1 in which the thermally decomposable containing compound is copper nitrate.

3. The method of claim 1 in which the carrier gas is nitrogen.

4. The method of claim 1 in which the operating temperature is 1000 - 1400°C.

5. The method of claim 4 in which the operating temperature is 1000 - 1235°C.

6. The method of claim 1 in which the thermally volatilizable solvent is deionized water.
